# NEUE EUROPÄISCHE PATENTSCHRIFT

(11) **EP 2 781 839 B2**
(45) Veröffentlichungstag und Bekanntmachung des Hinweises auf die Entscheidung über den Einspruch: **06.10.2021**
(45) Hinweis auf die Patenterteilung: 18.04.2018
(21) Anmeldenummer: 14160237.5
(22) Anmeldetag: 17.03.2014
(51) Int. Cl.: F24C 14/00, A47L 15/00, B08B 9/00, F04B 23/02, F04B 23/04

(54) **Gargerät mit einer Reinigungsvorrichtung**
Cooking appliance comprising a cleaning device
Appareil de cuisson comportant un dispositif de nettoyage

(30) Priorität: 19.03.2013 DE 102013004660; 02.10.2013 DE 102013110974
(43) Veröffentlichungstag der Anmeldung: 24.09.2014
(73) Patentinhaber: Hanning Elektro-Werke GmbH & Co. KG, 33813 Oerlinghausen (DE)
(72) Erfinder: Hangmann, Werner, 33758 Schloß Holte-Stukenbrock (DE); Pflug, Thomas, 33613 Bielefeld (DE); Evert, Christian, 33106 Paderborn (DE)
(74) Vertreter: Wickord, Wiro

(56) Entgegenhaltungen:
- EP-A1- 0 382 692
- EP-A1- 1 717 518
- EP-A1- 1 717 518
- EP-A1- 1 862 104
- EP-A2- 2 420 175
- EP-A2- 2 422 679
- DE-A1- 1 428 394
- DE-A1- 3 914 760
- DE-A1- 3 914 760
- DE-A1- 10 154 630
- DE-A1-102005 058 250
- DE-A1-102006 025 508
- DE-A1-102007 052 091
- DE-A1-102007 060 975
- DE-A1-102010 040 444
- DE-T2- 69 818 391
- DE-U1-202007 018 745
- DE-U1-202009 003 889
- US-A1- 2007 157 920
- US-A1- 2009 178 576

## Beschreibung

Die Erfindung betrifft ein Gargerät mit einer Reinigungsvorrichtung nach dem Oberbegriff des Patentanspruchs 1.

Reinigungsvorrichtungen für Gargeräte, verwenden regelmäßig eine Umwälzpumpe, um eine Reinigungsflüssigkeit dem zu reinigenden Garraum des Gargerätes zuzuführen. Die Flüssigkeit wird regelmäßig in einem Sammelbehältnis zur Verfügung gestellt, welches unterhalb des Garraums vorgesehen ist und in das in dem Garraum vorhandene Flüssigkeit durch eine Auslassöffnung einströmen kann. Die Umwälzpumpe ist an dem Sammelbehältnis vorgesehen. Regelmäßig wird sie im Bereich eines unteren Teils des Sammelbehältnisses, dem sogenannten Sammeltopf, zugeordnet.
In dem Sammelbehältnis werden neben der Reinigungsflüssigkeit auch die beim Zubereiten des Garguts gewonnene Flüssigkeit, im Rahmen der Reinigung entstehende Feststoffe, wie beispielsweise auskondensierter Kalk, beim Dämpfen des Garguts anfallendes überschüssiges Wasser sowie Bratrückstände und Fette gesammelt. Zum Entleeren des Sammelbehältnisses ist an diesem typischerweise eine Ablaufleitung vorgesehen mit einem steuerbaren Ventil. Über die Betätigung des Ventils kann die Entleerung des Sammelbehältnisses bedarfsgerecht durchgeführt werden. Aufgrund der aggressiven Medien, die beim Zubereiten des Garguts und beim Reinigen des Gargeräts anfallen, muss das Ventil aus einem sehr widerstandsfähigen Material, insbesondere aus Edelstahl, hergestellt werden. Das Ventil ist aus diesem Grund sehr teuer.

Aus der EP 1 717 518 A1 ist ein Gargerät mit einer Reinigungsvorrichtung bekannt, welche neben der Umwälzpumpe eine Entleerungspumpe zum aktiven Abpumpen der in dem Sammelbehältnis vorgesehenen Flüssigkeit mit etwaig darin vorgesehenen Feststoffen in die Ablaufleitung ausweist. Weiterer Stand der Technik ist in der DE 39 14 760 A1 beschrieben. Aufgabe der vorliegenden Erfindung ist es, eine Reinigungsvorrichtung für Gargeräte so weiterzubilden, dass auf das Ventil verzichtet werden kann und ein Pumpensystem insbesondere für die Reinigungsvorrichtung anzugeben. Zur Lösung der Aufgabe weist die Erfindung die Merkmale des Patentanspruchs 1 auf. Der besondere Vorteil der Erfindung besteht darin, dass durch das Vorsehen der Entleerungspumpe die Flüssigkeit aktiv aus dem Sammelbehältnis herausgefördert werden kann und auf ein betätigbares Absperrventil in der Ablaufleitung verzichtet werden kann. Indem die Entleerungspumpe gemeinsam mit der Umwälzpumpe dem gleichen Sammelbehältnis zugeordnet ist, wird lediglich ein einziger hydraulischer Kreislauf ausgebildet. Die Flüssigkeit kann insofern einerseits zur Reinigung des Garraums benutzt werden. In diesem Fall fördert die Umwälzpumpe in dem Sammelbehältnis vorgesehene Flüssigkeit über die Umwälzleitung in den Garraum. Bevorzugt wird die Flüssigkeit auf das angetriebene Ventilationsrad aufgebracht und durch das Ventilationsrad verteilt. Andererseits kann die in dem Sammelbehältnis vorgesehene Flüssigkeit mittels der Entleerungspumpe abgefördert und der Ablaufleitung zugeführt werden. Mit der Flüssigkeit werden dabei vorzugsweise auch Feststoffe, beispielsweise Kalk oder andere Reststoffe, aus dem Sammelbehältnis entfernt.

Dabei ist zwischen dem Sammelbehältnis und der Ablaufleitung eine Steigleitung vorgesehen. Die Entleerungspumpe ist derart dimensioniert, dass die in dem Sammelbehältnis vorgesehene Flüssigkeit mit dem etwaig hierin vorkommenden Feststoffen über die Steigleitung in die Ablaufleitung gepumpt werden kann. Durch das Vorsehen der Steigleitung ist sichergestellt, dass trotz des gemeinsamen hydraulischen Kreislaufs für Entleerungspumpe und Umwälzpumpe die in dem Sammelbehältnis vorgesehene Flüssigkeit nicht selbsttätig und unbeabsichtigt über die Ablaufleitung abfließt. Die Steigleitung ist insbesondere so ausgebildet, dass die Flüssigkeit zum Entfernen derselben aus dem Sammelbehältnis über ein maximal zulässiges Flüssigkeitsniveau des Sammelbehältnisses hinaus gepumpt werden muss. Hierdurch ist sichergestellt, dass eine Entleerung des Sammelbehältnisses nur aktiv beim Betreiben der Entleerungspumpe realisiert wird. Auf ein Ventil in der Ablaufleitung kann demzufolge verzichtet werden.
Nach einer Weiterbildung der Erfindung ist in der Steigleitung ein Rückschlagventil vorgesehen. Durch das Rückschlagventil, welches insbesondere in einem unteren Bereich der Steigleitung beziehungsweise entleerungspumpennah vorgesehen wird, ist einem Rückfluss von bereits in der Steigleitung vorgesehener Flüssigkeit in das Sammelbehältnis entgegengewirkt.
Bezogen auf eine horizontale Einbauposition der Reinigungsvorrichtung ist ein Förderrad der Entleerungspumpe vorzugsweise unterhalb eines Förderrads der Umwälzpumpe vorgesehen. Indem das Förderrad der Entleerungspumpe unterhalb des Förderrads der Umwälzpumpe vorgesehen ist, wird zum einen eine vollständige beziehungsweise weitgehend vollständige Entleerung des Sammelbehältnisses begünstigt. Darüber hinaus werden etwaig in der Flüssigkeit, vorhandene Feststoffe insbesondere dann auf den Grund des Sammelbehältnisses sinken und sich dort sammeln, wenn die Flüssigkeit in dem Sammelbehältnis nicht umgewälzt wird. Die Feststoffe können dann mit der unterhalb der Umwälzpumpe vorgesehenen Entleerungspumpe abgefördert werden. Insbesondere kann vorgesehen sein, die Entleerungspumpe benachbart zu einer unteren Wandung des Sammelbehältnisses und/oder im Bereich eines den tiefsten Punkt des Sammelbehältnisses in der horizontalen Einbauposition definierenden Sumpfs des Sammelbehältnisses vorzusehen.

Gleichzeitig wird durch die in Bezug zum Entleerungspumpenrad erhabene Anordnung des Umwälzpumpenrads sichergestellt, dass bevorzugt Flüssigkeit mit keinen oder wenigen Feststoffen über die Umwälzleitung zwecks Reinigung in den Garraum gefördert wird. Die Umwälzpumpe wird insofern aufgrund ihrer Einbaulage allenfalls geringe Mengen an Feststoffen fördern. Einer unbeabsichtigten neuerlichen Verschmutzung des Garraums ist insofern konstruktiv entgegengewirkt.

Nach der Erfindung sind eine als Teil des Sammelbehältnisses ausgebildete erste Förderkammer für das Förderrad der Entleerungspumpe und eine zweite Förderkammer für das Förderrad der Umwälzpumpe vorgesehen. Jeweils weisen die Förderkammern eine Zulauföffnung für die Flüssigkeit und etwaig darin enthaltene Feststoffe und eine Auslassöffnung auf. Beispielsweise ist vorgesehen, dass sich an die Auslassöffnung der ersten Förderkammer die Steigleitung und an die Auslassöffnung der zweiten Förderkammer die Umwälzleitung anschließen.

Die Pumpen fördern die Flüssigkeit und gegebenenfalls die darin vorhandenen Feststoffe von einer Saugseite derselben, in deren Bereich die Zulauföffnung der Förderkammern vorgesehen ist, zur Druckseite, wobei im Bereich der Druckseite die Auslassöffnung vorgesehen ist. Durch das Vorsehen der Förderkammern wird gewährleistet, dass trotz des gemeinsamen Hydraulickreislaufs die Pumpen separat und individuell unter definierten Randbedingungen betrieben werden können. Insbesondere kann bei geeigneter Positionierung der Zulauföffnungen der Förderkammern weitgehend sichergestellt werden, dass ein Austausch der Flüssigkeit lediglich über die Förderkammer erfolgt, deren Pumpenrad angetrieben ist, während die Flüssigkeit in der anderen Förderkammer im Wesentlichen nicht abgefördert beziehungsweise ausgetauscht wird. Insgesamt bilden sich hierdurch definierte Strömungsverhältnisse aus und der Wirkungsgrad der Pumpen wird optimiert.

Die funktionale Trennung der beiden Förderkreisläufe in dem gemeinsamen hydraulischen System wird weiter begünstigt, wenn die Zulauföffnung der zweiten Förderkammer oberhalb der Zulauföffnung für die erste Förderkammer und insbesondere näherungsweise auf dem Niveau der Auslassöffnung der ersten Förderkammer vorgesehen ist.

Nach einer Weiterbildung der Erfindung ist vorgesehen, dass beide Förderkammern unterhalb einer an dem Sammelbehältnis vorgesehenen Zulauföffnung für die Zulaufleitung vorgesehen sind. Indem die Zulauföffnung der Zulaufleitung oberhalb der Förderkammern vorgesehen ist, kann jedenfalls durch das Zuführen von Flüssigkeit über die Zulaufleitung etwa zum Zwecke der Reinigung des Garraums sichergestellt werden, dass die Umwälzpumpe ebenso wie die Entleerungspumpe unter definierten hydraulischen Bedingungen betrieben werden kann. Jeweils können die Förderkammer der Entleerungspumpe und die Förderkammer der Umwälzpumpe vollständig mit Flüssigkeit geflutet sein.

Insbesondere aufgrund der während der Zubereitung der Speisen hohen Temperaturen und der in das Sammelbehältnis gelangenden Fette werden für das Sammelbehältnis heißfettfähige, temperaturstabile Werkstoffe, beispielsweise PPS, verwendet. Das Sammelbehältnis kann insbesondere mehrteilig ausgebildet sein, wobei die einzelnen Teile bevorzugt durch Kunststoffschweißen miteinander verbunden sind. Beispielsweise können als Teil des Sammelbehältnisses ein Sammeltopf und ein mit dem Sammeltopf verbundener Kragen vorgesehen sein. An dem Sammeltopf, der zur Aufnahme der Flüssigkeit ausgebildet ist und den Sumpf aufweist, sind die Entleerungspumpe und die Umwälzpumpe angeflanscht. Die aus dem Garraum austretende und über die Zulaufleitung zugeführte Flüssigkeit gelangt über den Kragen und eine zwischen dem Kragen und dem Sammeltopf als Teil des Sammeltopfs ausgebildeten Flüssigkeitszulauf in den Sammeltopf. Der Kragen wirkt insofern als ein trichterartiger Zulaufsammelkörper für den Sammeltopf. An dem Sammeltopf sind die Förderkammern für die Förderpumpen ausgebildet. Die Flüssigkeit wird beiden Pumpen über den gemeinsamen Flüssigkeitszulauf durchgeführt, wobei ein gemeinsames hydraulisches System gebildet ist. Hinsichtlich der Entleerungsfunktion und der Umwälzfunktion werden vorzugsweise nach dem Strömungsprinzip arbeitende Pumpen, insbesondere Kreiselpumpen, eingesetzt. Diese Pumpen sind durch eine gute Fremdkörperverträglichkeit gekennzeichnet. Gleichwohl können auch fremdkörperverträgliche Verdrängerpumpen, beispielsweise Wanderwellenpumpen, zur Anwendung kommen.

Nach der Erfindung ist zur Ansteuerung des Antriebsmotors für das Ventilationsrad ebenso wie zur Ansteuerung des Umwälzpumpenmotors und des Entleerungspumpenmotors eine dezentrale Leistungselektronik vorgesehen. Die Leistungselektronik umfasst insbesondere eine gemeinsame Versorgungseinheit mit einem Gleichrichter, einem Zwischenkreis und einem Leistungsfaktorkorrekturfilter sowie eine Mehrzahl von der Versorgungseinheit gespeister Wechselrichter für die Motoren. Die Motoren, welche insbesondere als BLDC-Motoren beziehungsweise bürstenlose Gleichstrommotoren ausgebildet sind, können beim Vorsehen der Wechselrichter drehzahlgeregelt betrieben werden. Die von der gemeinsamen Versorgungseinheit gespeisten Wechselrichter können unmittelbar an dem jeweiligen Motor vorgesehen und beispielsweise im Bereich eines Lagerschilds des Motors festgelegt sein; alternativ können wenigstens einzelne Wechselrichter unmittelbar im Bereich dergemeinsamen Versorgungseinheit realisiert werden. Zusätzlich kann zur Ansteuerung der Motoren eine zentrale Steuereinheit vorgesehen sein, welche beispielsweise über einen seriellen Datenbus mit den Wechselrichtern kommuniziert und das individuelle Betreiben der Motoren gewährleistet.

Vorteilhaft können durch die Verwendung einer gemeinsamen, dezentral im Bezug zu den Motoren vorgesehenen Versorgungseinheit Kostenvorteile realisiert und der Bauraumbedarf gesenkt werden. Die dezentrale Unterbringung der Leistungselektronik insgesamt beziehungsweise der Versorgungseinheit erlaubt einen Betrieb der Motoren bei hohen Umgebungstemperaturen, während die Versorgungseinheit und gegebenenfalls auch die Wechselrichter räumlich getrennt, vorzugsweise in einem Installationsraum, bei einer niedrigeren Umgebungstemperatur untergebracht sind und betrieben werden. Daher können hierfür weniger temperaturbeständige und preiswertere Komponenten eingesetzt werden. Zudem kann durch die getrennte Anordnung von Motoren, Wechselrichtern und Versorgungseinheit der vorhandene Bauraum in optimierter Weise ausgenutzt werden, da eine Mehrzahl kleiner Komponenten in dem geräteseitig zur Verfügung stehenden Bauraum einfacher unterzubringen ist als eine große Baueinheit.
Die Leistungselektronik insgesamt oder die Versorgungseinheit können beispielsweise auf einer Hauptsteuerungsplatine des Gargerätes vorgesehen werden. Die Hauptsteuerung für das Gargerät wird regelmäßig an einem Ort vorgesehen beziehungsweise verbaut sein, an dem keine unzulässig hohen beziehungsweise kritischen Temperaturen vorherrschen. Die funktionale beziehungsweise räumliche Integration der Leistungselektronik oder der Versorgungseinheit in der Hauptsteuerung kann unter Bauraum- und Kostengesichtspunkten vorteilhaft sein und die Montage vereinfachen.
Nach einer Weiterbildung der Erfindung ist eine zentrale Steuereinheit vorgesehen, welche mit den Wechselrichtern der dezentralen Leistungselektronik zusammenwirkt. Das Vorsehen der zentralen Steuereinheit stellt sicher, dass die Motoren unabhängig voneinander betrieben werden und in einen einheitlichen Gesamtsteuerungsprozess eingebunden sind. Ebenso besteht die Möglichkeit, das System bei Verwendung der zentralen Steuereinheit modular zu erweitern. Beispielsweise können weitere Aktorkomponenten durch die bereits vorgesehene Steuereinheit angesteuert werden. Ebenso können eine Heizung oder Sensoren mit der zentralen Steuereinheit zusammenwirken oder von dieser betrieben werden.

Beispielsweise weist das Gargerät mit der Reinigungsvorrichtung ein Pumpensystem, wie es die DE 10 2013 004 660.2 beschreibt. Das Pumpensystem umfasst insbesondere eine erste Pumpe, welche als Entleerungspumpe konzipiert ist, eine zweite Pumpe, welche als Umwälzpumpe konzipiert ist, und einen einzigen Sammeltopf für eine mittels der Pumpen förderbaren Flüssigkeit, wobei der Sammeltopf insbesondere als ein integraler Bestandteil des Sammelbehältnisses der Reinigungsvorrichtung vorgesehen ist, wobei die Entleerungspumpe der Entleerung des Sammeltopfs und die Umwälzpumpe der Umwälzung von in dem Sammeltopf vorgesehener Flüssigkeit dient und wobei die Pumpen an dem Sammeltopf angeflanscht sind.

An dem Sammeltopf als unteren Bereich des Sammelbehältnisses sind als erste Pumpe die Entleerungspumpe und als zweite Pumpe die Umwälzpumpe vorgesehen. Solange Flüssigkeit in dem Sammelbehältnis vorhanden ist, wird diese jedenfalls auch im Bereich des Sammeltopfs zusammenfließen und den Betrieb der Entleerungspumpe beziehungsweise der Umwälzpumpe erlauben. Weitere Bereiche des Sammelbehältnisses können beispielsweise dazu dienen, aus dem Garraum des Gargeräts austretende Flüssigkeit oder über die Zulaufleitung zugeführte Flüssigkeit aufzunehmen und dem Sammeltopf zuzuführen. Insbesondere kann das Sammelbehältnis hierzu einen oberhalb des Sammeltopfs vorgesehenen Sammelkragen umfassen. Im Übergang zwischen dem Sammelkragen und dem Sammeltopf ist dann bevorzugt ein gemeinsamer Flüssigkeitszulauf für die zwei Pumpen vorgesehen.

Im Bereich des Sammeltopfs können die beiden Pumpen, bezogen auf eine horizontale Einbaulage des Pumpensystems, auf einem unterschiedlichen Höhenniveau angeordnet werden. Beispielsweise kann die Entleerungspumpe unterhalb der Umwälzpumpe vorgesehen werden, etwa im Bereich eines den tiefsten Punkt des Sammeltopfs definierenden Sumpfs. Die entsprechende Anordnung der Pumpen gewährleistet zum einen, dass das Sammelbehältnis und im Speziellen der Sammeltopf im Wesentlichen vollständig entleert werden können. Zudem werden etwaig in der Flüssigkeit vorgesehene Feststoffe bevorzugt im unteren Bereich des Sammeltopfs vorliegen, sodass die Umwälzpumpe insbesondere Flüssigkeit, welche frei von Feststoffen ist oder nur wenige Feststoffe aufweist, über die Umwälzleitung zur Reinigung des Garraums in eben diesen gefördert, während die Feststoffe beim Betreiben der Entleerungspumpe mit abgefördert werden..

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Es zeigen:
- Figur 1: eine Prinzipdarstellung einer erfindungsgemäßen Reinigungsvorrichtung mit einem erfindungsgemäßen Pumpensystem,
- Figur 2: eine erste perspektivische Ansicht des erfindungsgemäßen Pumpensystems nach Figur 1 in einer Vorderansicht,
- Figur 3: eine zweite perspektivische Unteransicht des Pumpensystems nach Figur 2,
- Figur 4: eine Aufsicht auf das Pumpensystem nach Figur 2 und
- Figur 5: eine Unterseitenansicht des Pumpensystems nach Figur 2.

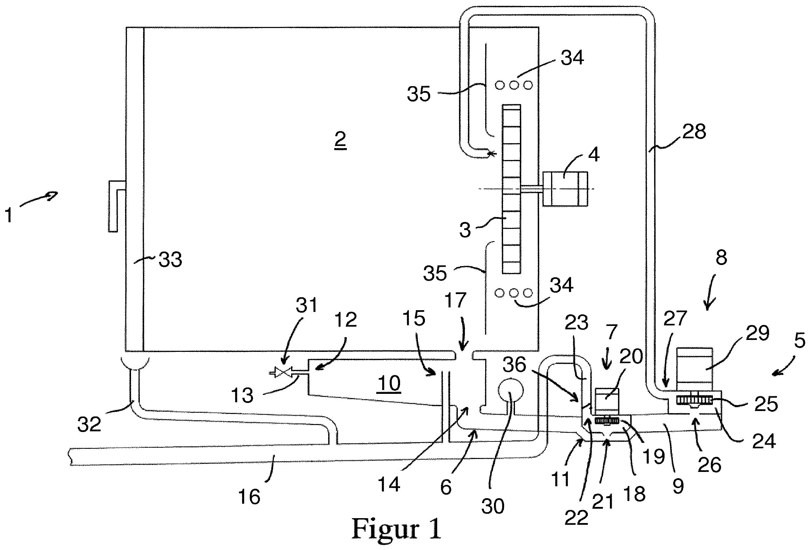

Figur 1 zeigt eine Prinzipdarstellung eines Gargeräts. Als wesentliche Komponenten umfasst das Gargerät ein Garsystem 1 mit einem Garraum 2, mit einem Ventilationsrad 3, welches in dem Garraum 2 vorgesehen ist, und mit einem Antriebsmotor 4 für das Ventilationsrad 3, ein Pumpensystem 5 mit einem Sammelbehältnis 6, einer Entleerungspumpe 7, mit einer Umwälzpumpe 8 und diversen Flüssigkeitsleitungen 16, 23, 28 sowie eine nicht dargestellte Ansteuerung. Durch das Garsystem 1, das Pumpensystem 5 und die Ansteuerung ist eine Reinigungsvorrichtung für das Gargerät realisiert, die insbesondere eine Selbstreinigungsfunktion des Garraums 2 ermöglicht. Wesentliches Merkmal der Reinigungsvorrichtung ist hierbei der durch das Sammelbehältnis 6 und die beiden Pumpen 7, 8 gebildete gemeinsame Hydraulikkreislauf, der es erlaubt, die in dem Sammelbehältnis 6 vorgesehene Flüssigkeit entweder beim Betreiben der Umwälzpumpe 8 zwecks Reinigung des Garraums 2 in eben diesen zu fördern oder die Flüssigkeit beim Betreiben der Entleerungspumpe 7 aus dem Sammelbehältnis 6 abzupumpen.

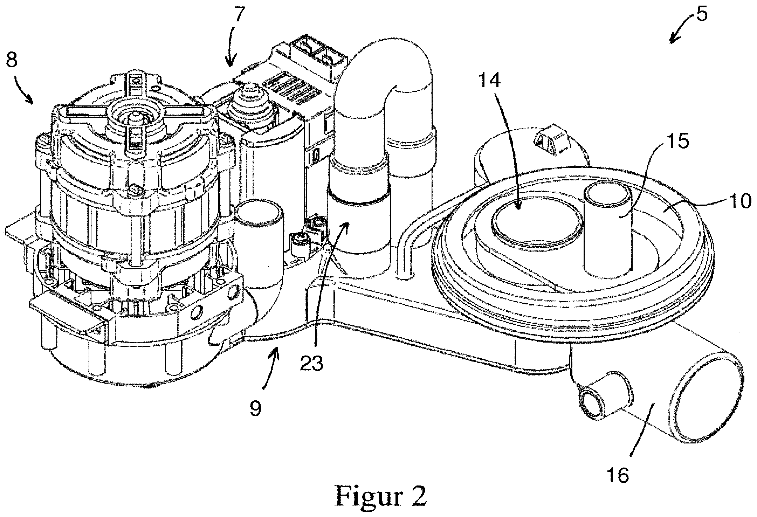

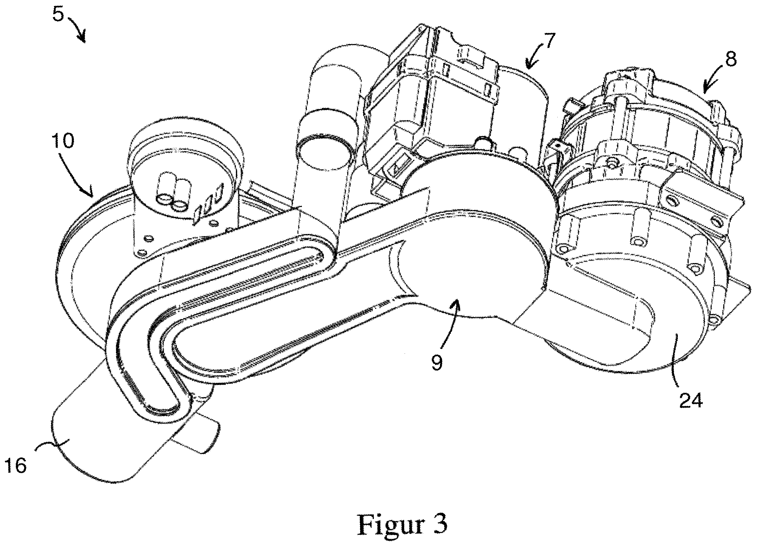

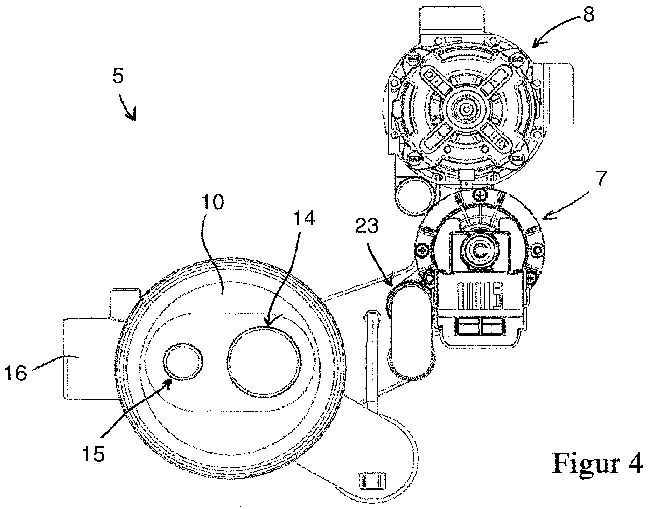

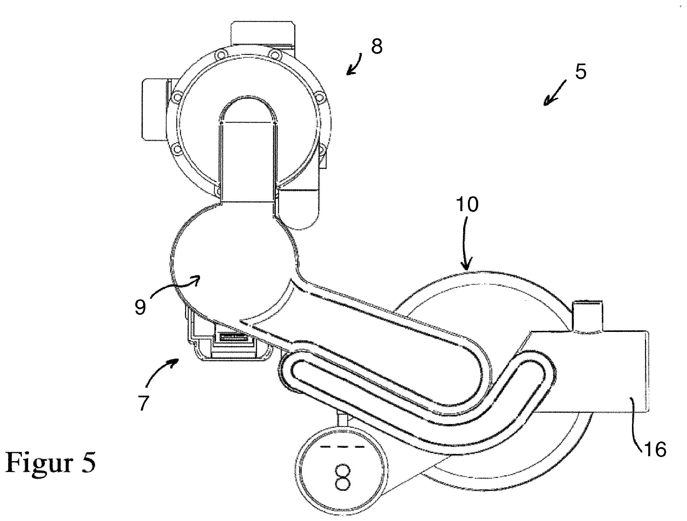

Das Pumpensystem 5, das in den Figuren 2 bis 5 in einer konkreten Realisierung dargestellt ist, umfasst das mehrteilige Sammelbehältnis 6. Als wesentliche Komponenten sind hier ein Sammeltopf 9 und ein Kragen 10 des Sammelbehältnisses 6 vorgesehen. Vorzugsweise wird das Sammelbehältnis 6 aus einem temperaturstabilen, insbesondere heißfettfähigen und chemisch resistenten Kunststoff, beispielsweise Polyphenylensulfid (PPS), hergestellt. Die einzelnen Teile des mehrteiligen Sammelbehältnisses 6 sind vorzugsweise mittels Kunststoffschweißens dicht miteinander verbunden. Der Sammeltopf 9 und der Kragen 10 können für sich einteilig oder aus einer Mehrzahl einzelner Teile hergestellt sein.

An dem Sammeltopf 9, welcher bezogen auf eine horizontale Einbauposition unterhalb des Kragens 10 vorgesehen ist, sind die Entleerungspumpe 7 und die Umwälzpumpe 8 so festgelegt, dass in dem Sammeltopf 9 vorgesehene Flüssigkeit mittels der Entleerungspumpe 7 beziehungsweise der Umwälzpumpe 8 aus dem Sammeltopf 9 gefördert wird. Die Umwälzpumpe 8 ist dabei - bezogen auf die horizontale Einbauposition der Reinigungsvorrichtung - oberhalb der Entleerungspumpe 7 montiert. Ein Sumpf 11 definiert eine tiefste Stelle des Sammeltopfs 9, wobei die Entleerungspumpe 7 im Bereich des Sumpfs 11 vorgesehen ist. Die Anordnung der Entleerungspumpe 7 im Bereich des Sumpfs 11 gewährleistet, dass in dem Sammeltopf 9 vorgesehene Flüssigkeit im Wesentlichen vollständig aus dem Sammeltopf 9 abgefördert werden kann. Indem die Umwälzpumpe 8 an dem Sammeltopf 9 oberhalb der Entleerungspumpe 7 und außerhalb des Sumpfs 11 vorgesehen wird, fördert die Umwälzpumpe 8 bevorzugt Flüssigkeit, die frei beziehungsweise weitgehend frei von Feststoffen, beispielsweise Kalk oder verklumpten Bratrückständen, ist. Diese Feststoffe sinken an den Grund des Sammeltopfs 9 und sammeln sich insbesondere im Bereich des Sumpfs 11, sodass sie beim Entleeren des Sammelbehältnisses 6 von der Entleerungspumpe 7 zusammen mit der Flüssigkeit abgefördert werden können.

An den Sammeltopf 9 ist der Kragen 10 angeschlossen. Der Sammeltopf 9 weist hierzu einen Flüssigkeitszulauf 14 auf. An dem Kragen 10 ist eine Zulauföffnung 12 vorgesehen, über die Frischwasser, Reinigungsflüssigkeit oder dergleichen in das Sammelbehältnis 6 einfließen kann. Es ist zu diesem Zweck an die Zulauföffnung 12 eine Zuleitung 13 mit einem Ventil 31 anschließbar. Des Weiteren ist im Bereich des Kragens 10 ein Überlauf 15 vorgesehen. Der Überlauf 15 ist an eine Ablaufleitung 16 angeschlossen und stellt sicher, dass beim Überschreiten eines maximalen Flüssigkeitsniveaus in dem Sammelbehältnis 6 Flüssigkeit über die Ablaufleitung 16 abfließt. Schließlich verbindet eine Auslassöffnung 17 den Garraum 2 so mit dem Kragen 10 des Sammelbehältnisses 6, dass Flüssigkeit aus dem Garraum 2 über die Auslassöffnung 17 desselben in den Kragen 10 des Sammelbehältnisses 6 und von dort über den Flüssigkeitszulauf 14 in den Sammeltopf 9 gelangt. Der Flüssigkeitszulauf 14 ist insofern als gemeinsamer Zulauf 14 für die Entleerungspumpe 7 und die Umwälzpumpe 8 gebildet.

Als Teil des Sammelbehältnisses 6 ist an dem Sammeltopf 9 eine der Entleerungspumpe 7 zugeordnete Förderkammer 18 vorgesehen. Ein Förderrad 19 der Entleerungspumpe 7, welches von einem Entleerungspumpenmotor 20 angetrieben wird, befindet sich in der Förderkammer 18. Wird die Entleerungspumpe 7 betrieben, strömt Flüssigkeit über eine Zulauföffnung 21 in die Förderkammer 18. Weiter strömt die Flüssigkeit über eine Auslassöffnung 22 aus der Förderkammer 18 in eine sich anschließende Steigleitung 23 und von dort weiter in die Ablaufleitung 16.

Eine zweite Förderkammer 24 ist der Umwälzpumpe 8 zugeordnet. Ein Förderrad 25 der Umwälzpumpe 8 ist in der Förderkammer 24 vorgesehen. Wird die Umwälzpumpe 8 betrieben, strömt Flüssigkeit aus dem Sammeltopf 9 über eine Zulauföffnung 26 in die Förderkammer 24 und von dort weiter über eine Auslassöffnung 27 in eine Umwälzleitung 28. Das Förderrad 25 der Umwälzpumpe 8 wird hierbei durch einen Umwälzpumpenmotor 29 betrieben. Die von der Umwälzpumpe 8 geförderte Flüssigkeit gelangt über die Umwälzleitung 28 in den Garraum 2. Bevorzugt wird die Flüssigkeit auf das durch den Antriebsmotor 4 angetriebene Ventilationsrad 3 aufgebracht und im Garraum 2 verteilt.

Im Bereich der Steigleitung 23 ist ein Rückschlagventil 36 vorgesehen. Das Rückschlagventil 36 ist benachbart zu der Entleerungspumpe 7 so angeordnet, dass von der Entleerungspumpe 7 bereits in die Steigleitung 23 geförderte Flüssigkeit nach dem Durchströmen des Rückschlagventils 36 an einem Rückfluss in Richtung des Sammelbehältnisses 6 gehindert wird und dass diesem Rückfluss entgegengewirkt ist.

Die Steigleitung 23 ist - bezogen auf die horizontale Einbauposition der Reinigungsvorrichtung - so ausgebildet, dass die von der Entleerungspumpe 7 geförderte Flüssigkeit über das durch den Überlauf 15 definierte maximale Flüssigkeitsniveau im Sammelbehältnis 6 gepumpt wird und erst dann in die Ablaufleitung 16 gelangt. Einem selbsttätigen, insbesondere passiven und unbeabsichtigten Abfluss der in dem Sammelbehältnis 6 vorgesehenen Flüssigkeit in die Ablaufleitung 16 ist dadurch vorgebeugt. Das Entleeren des Sammelbehältnisses 6 erfolgt insofern stets aktiv durch Betreiben der Entleerungspumpe 7.

Dem Garraum 2 ist weiter ein Ablauf 32 zugeordnet. Über den Ablauf 32 gelangt Flüssigkeit, beispielsweise Kondensflüssigkeit, welche sich an einer Tür 33 des Garraums 2 niederschlägt, unmittelbar in die Ablaufleitung 16.

Die nicht dargestellte Ansteuerung umfasst eine Leistungselektronik sowie eine Steuereinheit. Als Teil der Leistungselektronik sind insbesondere drei den Motoren 4, 20 und 29 funktional zugeordnete Wechselrichter und eine gemeinsame, die Wechselrichter speisende Versorgungseinheit mit einem Gleichrichter, einem Zwischenkreis und einem Leistungsfaktorkorrekturfilter (PFC) vorgesehen. Die Steuereinheit kommuniziert beispielsweise über einen seriellen Datenbus mit den Wechselrichtern der Motoren 4, 20, 29.

An dem Sammelbehältnis 6 ist ein dem Sammeltopf 9 zugeordneter Sensor 30 vorgesehen. Der Sensor 30 ist vorzugsweise als Drucksensor 30 ausgebildet und dient der Erfassung einer Flüssigkeitsmenge in dem Sammeltopf 9. Beispielsweise ist der Sensor 30 datentechnisch, insbesondere über den seriellen Datenbus, mit der Steuereinheit der Ansteuerung verbunden. Ebenfalls von der zentralen Steuereinheit kann das in der Zulaufleitung 13 vorgesehenes, betätigbares Ventil 31 angesteuert werden. Über das Ventil 31 wird der Zulauf von Wasser beziehungsweise Reinigungsflüssigkeit in das Sammelbehältnis 6 gesteuert.
Die Steuereinheit kann beispielsweise dazu dienen, eine hinter einer Luftleitfläche 35 angeordnete Heizung 36 des Gargeräts zu betreiben. Ebenso kann für den Betrieb des Gargeräts eine weitere, nicht dargestellte Steuerung vorgesehen werden.
Das Zuführen von Frischwasser, Reinigungsflüssigkeit oder dergleichen über die Zulaufleitung 13 in das Sammelbehältnis 6 ist lediglich exemplarisch und verdeutlicht eine mögliche Ausführungsform der Reinigungsvorrichtung. Beispielsweise kann die Zulauföffnung 12 unmittelbar am Back- beziehungsweise Garraum 2 vorgesehen sein. Über die Zulaufleitung 13 mit dem Ventil 31 kann dann zum Beispiel Frischwasser direkt in den Garraum 2 eingebracht werden.
Als Teil der Reinigungsvorrichtung kann ein Verschmutzungssensor beziehungsweise ein Temperatursensor vorgesehen sein. Selbstverständlich können an dem Sammelbehältnis 6 mehrere Sensoren vorgesehen sein. Insofern ist das Vorsehen des Drucksensors 30 nicht einschränkend. Auf den Drucksensor 30 kann verzichtet werden.

## Patentansprüche

1. Gargerät mit einer Reinigungsvorrichtung
- mit einem zu reinigenden Garraum (2), welcher durch mindestens eine Wandung begrenzt ist und an dem wenigstens eine Auslassöffnung (17) für eine Flüssigkeit vorgesehen ist,
- mit einem Ventilationsrad (3), welches dem Garraum (2) zugeordnet ist, und einem Antriebsmotor (4) für das Ventilationsrad (3),
- mit einem Sammelbehältnis (6), welches die über die Auslassöffnung (17) aus dem Garraum (2) austretende Flüssigkeit wenigstens temporär aufnimmt,
- mit einer Zulaufleitung (13), über die Frischwasser und/oder eine Reinigungsflüssigkeit zuführbar ist, wobei der Zulauf von Frischwasser und/oder Reinigungsflüssigkeit durch ein in der Zulaufleitung (13) vorgesehenes Ventil (31) steuerbar ist,
- mit einer an dem Sammelbehältnis (6) vorgesehenen Umwälzpumpe (8) für die in dem Sammelbehältnis (6) vorgesehene Flüssigkeit,
- mit einer Umwälzleitung (28), über die in dem Sammelbehältnis (6) vorgesehene und von der Umwälzpumpe (8) geförderte Flüssigkeit dem Garraum (2) zuführbar ist
- und mit einer Ablaufleitung (16) zum Abführen der aus dem Garraum (2) austretenden Flüssigkeit,
wobei an dem Sammelbehältnis (6) zusätzlich zu der Umwälzpumpe (8) eine Entleerungspumpe (7) vorgesehen ist, über die die in dem Sammelbehältnis (6) vorgesehene Flüssigkeit mit etwaig hierin vorgesehenen Feststoffen aktiv in die Ablaufleitung (16) förderbar ist, **dadurch gekennzeichnet, dass** an dem Sammelbehältnis (6) als integraler Teil desselben eine ein Förderrad (19) der Entleerungspumpe (7) aufnehmende erste Förderkammer (18) und eine ein Förderrad (25) der Umwälzpumpe (8) aufnehmende zweite Förderkammer (24) vorgesehen sind, wobei an den Förderkammern (18, 24) jeweils eine Zulauföffnung (21, 26) für die Flüssigkeit und eine Auslassöffnung (22, 27) vorgesehen sind, und dass sich an
die Auslassöffnung (22) der ersten Förderkammer (18) eine Steigleitung (23), von der aus die Flüssigkeit in die Ablaufleitung (16) strömt, anschließt und dass zum Betreiben des Antriebsmotors (4) für das Ventilationsrad (3), eines Umwälzpumpenmotors (29) für das Antreiben des Förderrads (25) der Umwälzpumpe (8) und eines Entleerungspumpenmotors (20) für das Antreiben des Förderrads (19) der Entleerungspumpe (7) eine dezentrale Leistungseleklronik mit einem ersten Wechselrichter für den Antriebsmotor (4) des Ventilationsrads (3) und einem zweiten Wechselrichter für den Umwälzpumpenmotor (29) und einem dritten Wechselrichter für den Entleerungspumpenmotor (20) sowie einer gemeinsamen Versorizungseinheit für die Wechselrichter vorgesehen ist, wobei die gemeinsame Versorgungseinheit einen Gleichrichter, einen Zwischenkreis und optional einen Leistungsfaktorkorrekturfilter aufweist.

2. Gargerät nach Anspruch 1, **dadurch gekennzeichnet, dass** die Steigleitung (23) zwischen dem Sammelbehältnis (6) und der Ablaufleitung (16) vorgesehen ist und dass die Entleerungspumpe (7) derart dimensioniert ist, dass die in dem Sammelbehältnis (6) vorgesehene Flüssigkeit und die etwaig hierin vorgesehenen Feststoffe über die Steigleitung (23) der Ablaufleitung (16) abgeführt werden.

3. Gargerät nach Anspruch 2, **dadurch gekennzeichnet, dass** in der Steigleitung (23) ein Rückschlagventil (36) vorgesehen ist derart, dass einem Rückfluss der in der Steigleitung (23) befindlichen und in eine Förderrichtung der Entleerungspumpe (7) gesehen vor dem Rückschlagventil (36) vorgesehenen Flüssigkeit in das Sammelbehältnis (6) entgegengewirkt ist.

4. Gargerät nach einem der Ansprüche 1 bis 3, **dadurch gekennzeichnet, dass** bezogen auf eine horizontale Einbauposition der Reinigungsvorrichtung das Förderrad (19) der Entleerungspumpe (7) unterhalb des Förderrads (25) der Umwälzpumpe (8) vorgesehen ist.

5. Gargerät nach einem der Ansprüche 1 bis 4, **dadurch gekennzeichnet, dass** sich an die Auslassöffnung (27) der zweiten Förderkammer (24) die Umwälzleitung (28) anschließt.

6. Gargerät nach einem der Ansprüche 1 bis 5, **dadurch gekennzeichnet, dass** die erste Förderkammer (18) mit dem Förderrad (19) der Entleerungspumpe (7) und die zweite Förderkammer (24) mit dem Förderrad (25) der Umwälzpumpe (8) unterhalb einer an dem Sammelbehältnis (9) vorgesehenen Zulauföffnung (12) für die Zulaufleitung (13) vorgesehen sind, und/oder dass die erste Förderkammer (18) bezogen auf die horizontale Einbauposition der Reinigungsvorrichtung unterhalb der zweiten Förderkammer (24) vorgesehen ist.

7. Gargerät nach einem der Ansprüche 1 bis 6, **dadurch gekennzeichnet, dass** das Sammelbehältnis (6) aus einem temperaturbeständigen und chemisch resistenten Kunststoff hergestellt ist und/oder dass das Sammelbehältnis (6) aus einer Mehrzahl von Komponenten besteht, die mittels Kunststoffschweißens dicht miteinander verbunden sind, wobei als Komponenten des Sammelbehältnisses (6) der Kragen (10) und der Sammeltopf (9) vorgesehen sind, die derart angeordnet und ausgebildet sind, dass die Flüssigkeit aus dem Garraum (2) und/oder die über die Zulaufleitung (13) zugeführte Flüssigkeit über den Kragen (10) und einen zwischen dem Kragen (10) und dem Sammeltopf (9) gebildeten Flüssigkeitszulauf (14) in den Sammeltopf (9) gelangt und von dort mittels der Pumpen (7, 8) abgefördert wird.

8. Gargerät nach einem der Ansprüche 1 bis 7, **dadurch gekennzeichnet, dass** eine Achse der Entleerungspumpe (7) und eine Achse der Umwälzpumpe (8) in der horizontalen Einbauposition vertikal orientiert sind.

9. Gargerät nach einem der Ansprüche 1 bis 8, **dadurch gekennzeichnet, dass** an dem Sammelbehältnis (6) ein Sensor (30) zur Bestimmung einer in dem Sammelbehältnis (6) und/oder einem Teil (Sammeltopf 9, Kragen 10, Sumpf 11) desselben vorgesehenen Flüssigkeitsmenge und/oder ein Temperatursensor und/oder ein Sensor zur Bestimmung eines Verschmutzungsgrads der in dem Sammelbehältnis (6) befindlichen Flüssigkeit vorgesehen sind.

10. Gargerät nach einem der Ansprüche 1 bis 9, **dadurch gekennzeichnet, dass** der dezentralen Leistungselektronik eine zentrale Steuereinheit zugeordnet ist, welche mit den Wechselrichtern der dezentralen Leistungselektronik zusammenwirkt zum Ansteuern der Motoren (4, 20, 29).

11. Gargerät nach Anspruch 10, **dadurch gekennzeichnet, dass** die zentrale Steuereinheit und die Wechselrichter der dezentralen Leistungselektronik über einen Datenbus, insbesondere einen seriellen Datenbus, verbunden sind.

## Claims

1. Cooking appliance comprising a cleaning device
- comprising a cooking space (2) to be cleaned, which is delimited by at least one wall and on which at least one outlet opening (17) for a liquid is provided,
- comprising a ventilation wheel (3) assigned to the cooking space (2) and a drive motor (4) for the ventilation wheel (3),
- comprising a collection container (6) which at least temporarily accommodates the liquid which escapes from the cooking space (2) via the outlet opening (17),
- comprising an inflow line (13) via which fresh water and/or a cleaning fluid can be supplied, the inflow of fresh water and/or cleaning fluid being controllable by a valve (31) provided in the inflow line (13),
- comprising a circulator pump (8) provided on the collection container (6) for the liquid provided in the collection container (6),
- comprising a circulation line (28) via which the liquid provided in the collection container (6) and conveyed by the circulator pump (8) can be supplied to the cooking space (2),
- and comprising an outflow line (16) for discharging the liquid escaping from the cooking space (2),
a drainage pump (7), via which the liquid provided in the collection container (6) along with solids potentially provided therein can be actively conveyed into the discharge line (16), being provided on the collection container (6) in addition to the circulator pump (8), **characterised in that** a first conveyor chamber (18), which accommodates a conveyor wheel (19) of the drainage pump (7) as an integral part thereof, and a second conveyor chamber (24), which accommodates a conveyor wheel (25) of the circulator pump (8), being provided on the collection container (6), an inflow opening (21, 26) for the liquid and an outlet opening (22, 27) being provided on each of the conveyor chambers (18, 24), and **in that** an uptake line (23), from which the liquid flows into the outflow line (16), is connected to the outlet opening (22) of the first conveyor chamber (18) and **in that** decentralised power electronics, comprising a first invertor for the drive motor (4) of the ventilation wheel (3) and a second invertor for the discharge pump motor (29) and a third invertor for the drainage pump motor (20) and a shared power supply unit for the invertors, are provided for operating the drive motor (4) for the ventilation wheel (3), a circulator pump motor (29) for driving the conveyor wheel (25) of the circulator pump (8) and a drainage pump motor (20) for driving the conveyor wheel (19) of the drainage pump (7), the shared power supply unit comprising a rectifier, a link and optionally a power factor correction filter.

2. Cooking appliance according to claim 1, **characterised in that** the uptake line (23) is provided between the collection container (6) and the outflow line (16) and **in that** the discharge pump (7) is dimensioned in such a way that the liquid provided in the collection container (6) and the solids potentially provided therein are discharged via the uptake line (23) of the outflow line (16).

3. Cooking appliance according to claim 2, **characterised in that** a check valve (36) is provided in the uptake line (23) so as to counteract backflow, into the collection container (6), of the liquid located in the uptake line (23) and provided upstream from the check valve (36) in the conveyor direction of the drainage pump (7).

4. Cooking appliance according to any of claims 1 to 3, **characterised in that**, with respect to a horizontal installation position of the cleaning device, the conveyor wheel (19) of the drainage pump (7) is provided below the conveyor wheel (25) of the circulator pump (8).

5. Cooking appliance according to any of claims 1 to 4, **characterised in that** the circulator line (28) is connected to the outlet opening (27) of the second conveyor chamber (24).

6. Cooking appliance according to any of claims 1 to 5, **characterised in that** the first conveyor chamber (18) comprising the conveyor wheel (19) of the drainage pump (7) and the second conveyor chamber (24) comprising the conveyor wheel (25) of the circulator pump (8) are provided below an inflow opening (12), provided on the collection container (9), for the inflow line (13), and/or **in that**, with respect to the horizontal installation position of the cleaning device, the first conveyor chamber (18) is provided below the second conveyor chamber (24).

7. Cooking appliance according to any of claims 1 to 6, **characterised in that** the collection container (6) is made of a thermally resistant and chemically resistant plastics material and/or **in that** the collection container (6) consists of a plurality of components which are tightly interconnected by plastics material welding, the collar (10) and the collection cup (9) being provided as components of the collection container (6) and being arranged and formed in such a way that the liquid from the cooking appliance (2) and/or the liquid supplied via the inflow line (13) arrive in the collection cup (9), via the collar (10) and a liquid inflow (14) formed between the collar (10) and the collection cup (9), and are conveyed away therefrom by means of the pumps (7, 8).

8. Cooking appliance according to any of claims 1 to 7, **characterised in that** an axis of the drainage pump (7) and an axis of the circulator pump (8) are orientated vertically in the horizontal installation position.

9. Cooking appliance according to any of claims 1 to 8, **characterised in that** a sensor (30) for determining an amount of liquid provided in the collection container (6) and/or in a part (collection cup 9, collar 10, drain 11) thereof and/or a temperature sensor and/or a sensor for determining a degree of soiling of the liquid located in the collection container (6) are provided on the collection container (6).

10. Cooking appliance according to any of claims 1 to 9, **characterised in that** a central control unit is assigned to the decentralised electronics and cooperates with the invertors of the decentralised power electronics to actuate the motors (4, 20, 29).

11. Cooking appliance according to claim 10, **characterised in that** the central control unit and the invertors of the decentralised power electronics are connected via a data bus, in particular a serial data bus.

## Revendications

1. Appareil de cuisson comportant un dispositif de nettoyage
- comportant un espace de cuisson (2) à nettoyer, lequel est délimité par au moins une paroi et sur lequel au moins une ouverture de sortie (17) pour un liquide est prévue,
- comportant une roue de ventilation (3), laquelle est associée à l'espace de cuisson (2), et comportant un moteur d'entraînement (4) de la roue de ventilation (3),
- comportant un récipient collecteur (6), lequel reçoit au moins temporairement le liquide sortant de l'espace de cuisson (2) par l'intermédiaire de l'ouverture de sortie (17),
- comportant une conduite d'amenée (13), par laquelle de l'eau fraîche et/ou un liquide de nettoyage peut être amené, l'amenée d'eau fraîche et/ou du liquide de nettoyage étant commandable au moyen d'une vanne (31) prévue dans la conduite d'amenée (13),
- comportant une pompe de circulation (8) prévue au niveau du récipient collecteur (6) pour le liquide prévu dans le récipient collecteur (6),
- comportant une conduite de circulation (28) par l'intermédiaire de laquelle le liquide prévu dans le récipient collecteur (6) et refouléé par la pompe de circulation (8) peut être amené à l'espace de cuisson (2),
- et comportant une conduite d'évacuation (16) destinée à évacuer le liquide sortant de l'espace de cuisson (2),
dans lequel appareil de cuisson une pompe de vidange (7) est prévue au niveau du récipient collecteur (6) en plus de la pompe de circulation (8), par l'intermédiaire de laquelle pompe de vidange le liquide prévu dans le récipient collecteur (6) peut être activement refoulé dans la conduite d'évacuation (16) avec d'éventuelles matières solides qui y sont éventuellement prévues, **caractérisé en ce qu'**une première chambre de refoulement (18) recevant une roue de refoulement (19) de la pompe de vidange (7) et une deuxième chambre de refoulement (24) recevant une roue de refoulement (25) de la pompe de circulation (8) sont prévues au niveau du récipient collecteur (6) en tant que partie intégrale de ce dernier, dans lequel respectivement une ouverture d'amenée (21, 26) pour le liquide et une ouverture de sortie (22, 27) sont prévues au niveau des chambres de refoulement (18, 24), et **en ce qu'**une conduite montante (23), depuis laquelle le liquide circule dans la conduite d'évacuation (16), se raccorde à l'ouverture de sortie (22) de la première chambre de refoulement (18) et **en ce que** pour le fonctionnement du moteur d'entraînement (4) de la roue de ventilation (3), d'un moteur (29) de pompe de circulation pour l'entraînement de la roue de refoulement (25) de la pompe de circulation (8) et d'un moteur (20) de pompe de vidange pour l'entraînement de la roue de refoulement (19) de la pompe de vidange (7), au système électronique de puissance décentralisé comportant un premier onduleur pour le moteur d'entraînement (4) de la roue de ventilation (3) et un deuxième onduleur pour le moteur (29) de la pompe de circulation et un troisième onduleur pour le moteur (20) de la pompe de vidange ainsi qu'une unité d'alimentation commune des onduleurs est prévu, l'unité d'alimentation commune présentant un redresseur, un circuit intermédiaire et, optionnellement, un filtre correcteur de facteur de puissance.

2. Appareil de cuisson selon la revendication 1, **caractérisé en ce que** la conduite montante (23) est prévue entre le récipient collecteur (6) et la conduite d'évacuation (16) et **en ce que** la pompe de vidange (7) est dimensionnée de manière à ce que le liquide prévu dans le récipient collecteur (6) et les matières solides qui y sont éventuellement prévues soient évacués par l'intermédiaire de la conduite montante (23) de la conduite d'évacuation (16).

3. Appareil de cuisson selon la revendication 2, **caractérisé en ce qu'**un clapet anti-retour (36) est prévu dans la conduite montante (23) de manière à ce qu'un flux de retour dans le récipient collecteur (6) du liquide se trouvant dans la conduite montante (23) et, en vue dans un sens de refoulement de la pompe de vidange (7), en amont du clapet anti-retour (36), soit empêché.

4. Appareil de cuisson selon l'une quelconque des revendications 1 à 3, **caractérisé en ce que**, par rapport à une position de montage horizontale du dispositif de nettoyage, la roue de refoulement (19) de la pompe de vidange (7) est prévue en dessous de la roue de refoulement (25) de la pompe de circulation (8).

5. Appareil de cuisson selon l'une quelconque des revendications 1 à 4, **caractérisé en ce que** la conduite de circulation (28) se raccorde à l'ouverture de sortie (27) de la deuxième chambre de refoulement (24).

6. Appareil de cuisson selon l'une quelconque des revendications 1 à 5, **caractérisé en ce que** la première chambre de refoulement (18), avec la roue de refoulement (19) de la pompe de vidange (7), et la deuxième chambre de refoulement (24), avec la roue de refoulement (25) de la pompe de circulation (8), sont prévues en dessous d'une ouverture d'amenée (12) prévue au niveau du récipient collecteur (9) pour la conduite d'amenée (13) et/ou **en ce que** la première chambre de refoulement (18), par rapport à la position de montage horizontale du dispositif de nettoyage, est prévue en dessous de la deuxième chambre de refoulement (24).

7. Appareil de cuisson selon l'une quelconque des revendications 1 à 6, **caractérisé en ce que** le récipient collecteur (6) est réalisé dans une matière plastique résistante à la température et chimiquement résistante et/ou **en ce que** le récipient collecteur (6) est constitué d'une pluralité de composants qui sont reliés entre eux de manière étanche par soudage de matière plastique, le col (10) et le pot collecteur (9) étant prévus comme composants du récipient collecteur (6), lesquels sont disposés et réalisés de manière à ce que le liquide en provenance de l'espace de cuisson (2) et/ou le liquide amené par l'intermédiaire de la conduite d'amenée (13) arrivent dans le récipient collecteur (6) par l'intermédiaire du col (10) et d'un circuit de liquide (14) formé entre le col (10) et le pot collecteur (9) et, que de là, ils soient refoulés au moyen des pompes (7, 8).

8. Appareil de cuisson selon l'une quelconque des revendications 1 à 7, **caractérisé en ce qu'**un axe de la pompe de vidange (7) et un axe de la pompe de circulation (8) sont orientés verticalement dans la position de montage horizontale.

9. Appareil de cuisson selon l'une quelconque des revendications 1 à 8, **caractérisé en ce qu'**un capteur (30) destiné à déterminer une quantité de liquide prévue dans le récipient collecteur (6) et/ou dans une partie (pot collecteur 9, col 10, puisard 11) de ce dernier et/ou un capteur de température et/ou un capteur destiné à déterminer un degré de salissure du liquide se trouvant dans le récipient collecteur (6) sont prévus au niveau du récipient collecteur (6).

10. Appareil de cuisson selon l'une quelconque des revendications 1 à 9, **caractérisé en ce qu'**une unité de commande centrale est associée au système électronique de puissance décentralisée, laquelle coopère avec les onduleurs du système électronique de puissance décentralisée pour la pilotage des moteurs (4, 20, 29).

11. Appareil de cuisson selon la revendication 10, **caractérisé en ce que** l'unité de commande centrale et les onduleurs du système électronique de puissance décentralisée sont reliés par l'intermédiaire d'un bus de données, notamment un bus de données sériel.
